# EUROPEAN PATENT SPECIFICATION

(11) **EP 3 185 257 B1**
(45) Date of publication and mention of the grant of the patent: **16.05.2018**
(21) Application number: 16203014.2
(22) Date of filing: 08.12.2016
(51) Int. Cl.: H01F 7/18

(54) **TIMER APPARATUS**
TIMERVORRICHTUNG
APPAREIL CHRONOMÉTREUR

(30) Priority: 25.12.2015 JP 2015255249
(43) Date of publication of application: 28.06.2017
(73) Proprietor: OMRON CORPORATION, Kyoto-shi, Kyoto 600-8530 (JP)
(72) Inventor: Yamada, Tomohiro, Kyoto-shi, Kyoto 600-8530 (JP); Fujimaru, Yasutaka, Kyoto-shi, Kyoto 600-8530 (JP); Ikeuchi, Ryo, Kyoto-shi, Kyoto 600-8530 (JP); Zhao, Peng-Cheng, Shanghai, 201206 (CN); Sato, Takahiro, Kyoto-shi, Kyoto 600-8530 (JP)
(74) Representative: Kilian Kilian & Partner

(56) References cited:
- EP-A2- 0 865 141
- US-A- 5 422 780
- US-A1- 2001 028 571

## Description

### FIELD

The present invention relates to a timer apparatus.

### BACKGROUND

There has conventionally been a time difference actuator that operates with a delay of a setting time from an input time point. The time difference actuator performs on-delay operation to perform power-on after a setting time elapses from a time point of receiving a power-on input, or performs off-delay operation to perform power-on at a time point of receiving a power-on input and perform power-off after a setting time elapses from a time point of receiving a power-off input. A timer apparatus is used in order to perform such operations of the time difference actuator. For example, Japanese Unexamined Patent Publication No. 2001-283702 describes a relay circuit (timer apparatus) including a timer power-supply circuit (step-down circuit) and a timer circuit T (time counting circuit).

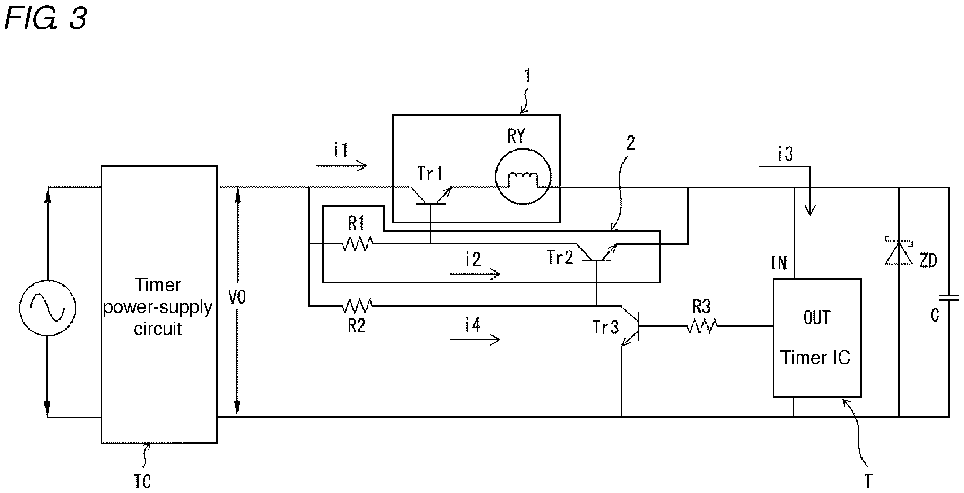

Fig. 3 is a circuit diagram illustrating a circuit configuration of a conventional timer apparatus described in Japanese Unexamined Patent Publication No. 2001-283702. The timer apparatus drives a relay RY after a predetermined time elapses since an AC voltage is applied to a timer power-supply circuit TC. The timer apparatus includes the timer power-supply circuit TC and a timer circuit T. A capacitor C is connected in parallel to the timer circuit T. Because the capacitor C is connected in parallel to the timer circuit T, the capacitor C can stabilize a voltage supplied to the timer circuit T.

The timer power-supply circuit TC outputs a voltage V0 when the voltage is input. An input signal current i3 is input to the timer circuit T by the voltage V0. The timer circuit T outputs an output signal voltage after a predetermined time elapses from a starting time point of the input of the input signal current i3.

A base voltage is not applied to a base of a control transistor Tr3 until the timer circuit T outputs the output signal voltage. Therefore, a base current is supplied to a bypass transistor Tr2 because a collector and an emitter of the control transistor Tr3 are disconnected.

By the base current, the emitter and the collector of the bypass transistor Tr2 are electrically connected together. Because a bypass current i2 flowing through a bypass series circuit 2 mainly flows via the collector and the emitter of the bypass transistor Tr2, a current supplied to the base of a relay driving transistor Tr1 is reduced. As a result, the collector and the emitter of the relay driving transistor Tr1 are disconnected, and accordingly, the relay RY is not driven.

When the timer circuit T outputs the output signal current to supply the base current to the base of the control transistor Tr3, the collector and the emitter of the control transistor Tr3 are electrically connected together. As a result, a bypass current i4 flowing through a resistor R2 mainly flows via the collector and the emitter of the control transistor Tr3. Accordingly, a current supplied to the base of the bypass transistor Tr2 is reduced, so that the emitter and the collector of the bypass transistor Tr2 are disconnected. The bypass current i2 flowing through a resistor R1 is supplied to the base of the relay driving transistor Tr1 as the base current, so that the collector and the emitter of the relay driving transistor Tr1 are electrically connected together. Therefore, a relay driving current i1 flows through the relay driving series circuit 1 to drive the relay RY.

### SUMMARY

The AC voltage input to the timer apparatus described in Japanese Unexamined Patent Publication No. 2001-283702 is input to the timer circuit T and the capacitor C after being stepped down by the timer power-supply circuit TC. The capacitor C stabilizes the voltage supplied to the timer circuit T.

In the timer apparatus, a time counting operation is controlled by an AC or DC input voltage. Therefore, it is necessary for the timer apparatus to instantaneously detect the power-on and electric interruption. However, when the capacitor C has a charge during the power-on or the electric interruption, the detection of the power-on and the electric interruption is delayed in the timer apparatus. Therefore, in the conventional timer apparatus, the capacitor C does not have a large capacity such that the timer apparatus does not delay the detection of the power-on and the electric interruption.

It is also necessary for the timer apparatus to be able to deal with a wide range of the AC or DC input voltage. In this configuration, the charge accumulated in the capacitor C is supplied to the timer circuit T as the current, but the capacitor C does not have the large capacity for the above reason. Therefore, even when the input voltage is low, it is necessary to sufficiently supply the current to the timer circuit T in order to drive the timer circuit T. However, in the case where the timer apparatus is configured to sufficiently supply the current to the timer circuit T even when the input voltage is low, the current supplied to the timer power-supply circuit TC and the timer circuit T is excessively increased when the input voltage is high. Especially, there arises a problem that heat generation in the timer power-supply circuit TC is increased.

Further prior art documents are US 5 422 780 A, EP 0 865 141 A2 and US 2001/028571 A1.

The present invention has been made in view of the above problem, and an object of the present invention is to provide a timer apparatus that can stabilize an input voltage to a time counting circuit even when being used corresponding to a wide range of the input voltage and can reduce the heat generation especially when the input voltage is high. This object is achieved by the subject-matter of claims 1 and 2. Further advantageous embodiments of the invention are the subject-matter of the dependent claims 3 to 6. Aspects of the invention are set out below.

A timer apparatus according to an aspect of the present invention includes a smoothing circuit comprising at least one capacitor and configured to smooth an input voltage from an outside, a step-down circuit configured to adjust a voltage supplied from the smoothing circuit, and a time counting circuit to which power is supplied from the step-down circuit. The smoothing circuit includes a switching circuit configured to switch the capacitor to be used according to the input voltage.

With this structure, the smoothing circuit smoothes the input voltage, so that the power supplied to the step-down circuit can be stabilized. Further, the switching circuit can change the electric capacity of the capacitor to be used to a necessary and sufficient value according to the input voltage. When the input voltage is low, the power supplied to the step-down circuit can sufficiently be stabilized by relatively increasing the electric capacity. In addition, when the input voltage is high, the power supplied from the capacitor to the step-down circuit can be suppressed by relatively decreasing the electric capacity, which allows the reduction of the heat generation in the step-down circuit.

When the input voltage is high, the charge supply can be decreased with respect to the electric capacity by relatively decreasing the electric capacity. Thus, a rising delay of the input voltage due to the electric capacity can be prevented, so that a time lag until starting of the electric power supply to an external electric apparatus since application starting of the input voltage can be prevented. Additionally, the input voltage from the smoothing circuit to the time counting circuit rises quickly during the electric interruption.

The timer apparatus having an effect of reducing the heat generation in the step-down circuit and an effect of suppressing the time lag until the starting of the electric power supply to the time counting circuit since the application starting of the input voltage can be provided.

In the timer apparatus, the smoothing circuit may include first and second capacitors that are connected in parallel. The switching circuit uses both the first and second capacitors when the input voltage is less than a predetermined value, and uses only the first capacitor when the input voltage is greater than or equal to the predetermined value.

With this structure, both the first and second capacitors connected in parallel to each other are used when the input voltage is less than the predetermined value, and only the first capacitor is used when the input voltage is greater than or equal to the predetermined value. Therefore, when the input voltage is greater than or equal to the predetermined value, the electric capacity can relatively be decreased compared with the case that the input voltage is less than the predetermined value. That is, the timer apparatus can have the effect of reducing the heat generation in the step-down circuit, and the effect of suppressing the time lag until the starting of the electric power supply to the time counting circuit since the application starting of the input voltage.

In the timer apparatus, the smoothing circuit may include third and fourth capacitors that are connected in series. The switching circuit uses only the third capacitor when the input voltage is less than a predetermined value, and uses both the third and fourth capacitors when the input voltage is greater than or equal to the predetermined value.

With this structure, only the third capacitor is used when the input voltage is less than the predetermined value, and both the third and fourth capacitors connected in series to each other are used when the input voltage is greater than or equal to the predetermined value. Therefore, when the input voltage is greater than or equal to the predetermined value, the electric capacity can relatively be decreased compared with the case that the input voltage is less than the predetermined value. Thus, the timer apparatus can have the effect of reducing the heat generation in the step-down circuit, and the effect of suppressing the time lag until the starting of the electric power supply to the time counting circuit since the application starting of the input voltage can be provided.

In the timer apparatus, the switching circuit may include a switching element, and the switching element may perform switching operation according to the input voltage to switch the capacitor to be used.

With this structure, the capacitor to be used is switched by the switching element, so that the timer apparatus can relatively simply be constructed at low cost.

The timer apparatus may further include a voltage dividing circuit configured to set a voltage applied to the second capacitor to a divided voltage lower than the input voltage when the input voltage is greater than or equal to the predetermined value.

With this structure, the excessive voltage can be prevented from being applied to the second capacitor when the input voltage is greater than or equal to the predetermined value. A breakdown voltage of the second capacitor can be lowered, so that the size of the second capacitor can be reduced. Accordingly, the timer apparatus can be downsized.

The timer apparatus may further include a voltage dividing circuit configured to set a voltage applied to each of the third and fourth capacitors to a divided voltage lower than the input voltage when the input voltage is greater than or equal to the predetermined value.

With this structure, the excessive voltage can be prevented from being applied to the third and fourth capacitors when the input voltage is greater than or equal to the predetermined value. The breakdown voltages of the third and fourth capacitors can be lowered, so that the sizes of the third and fourth capacitors can be reduced. Accordingly, the timer apparatus can be downsized.

The timer apparatus may further include an input voltage detecting circuit configured to input a signal, which indicates whether the input voltage is applied, to the time counting circuit. The input voltage detecting circuit detects the input voltage from the outside with no use of the smoothing circuit and the step-down circuit.

With this structure, the input voltage detecting circuit detects the input voltage from the outside with no use of the smoothing circuit and the step-down circuit, so that the time lag until the detection of the input voltage since the application starting of the input voltage. Therefore, the accuracy of the time counting operation can be improved in the time counting circuit.

The present invention provides a timer apparatus that can stabilize the input voltage to the time counting circuit even when being used corresponding to the wide range of the input voltage and can reduce the heat generation when the input voltage is high.

### BRIEF DESCRIPTION OF THE DRAWINGS

Fig. 1 is a circuit diagram illustrating a circuit configuration of a timer apparatus according to an embodiment;
Fig. 2 is a circuit diagram illustrating a circuit configuration of a timer apparatus including a modification of a waveform smoothing circuit illustrated in Fig. 1; and
Fig. 3 is a circuit diagram illustrating a conventional timer apparatus.

### DETAILED DESCRIPTION

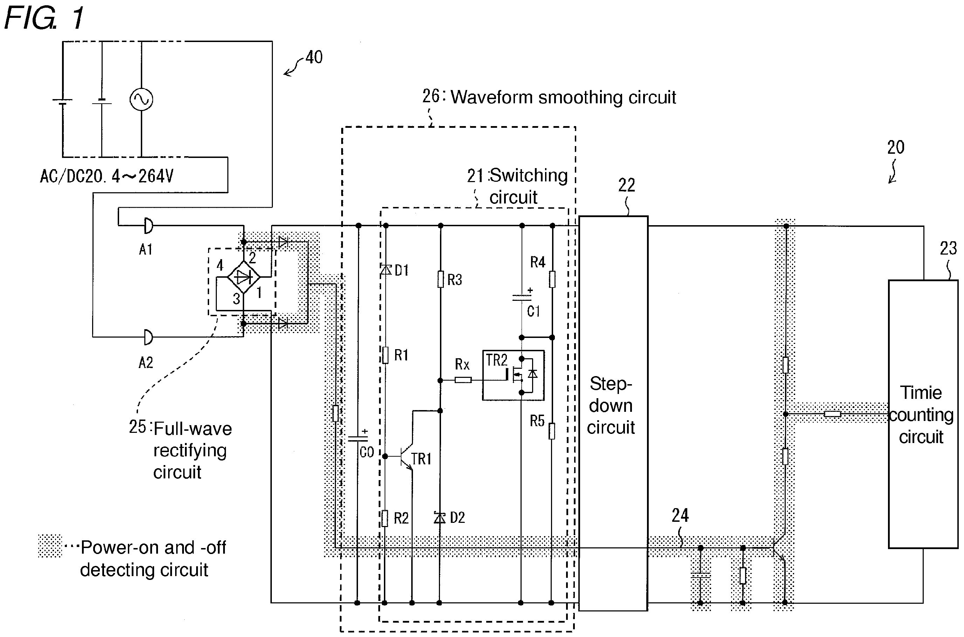

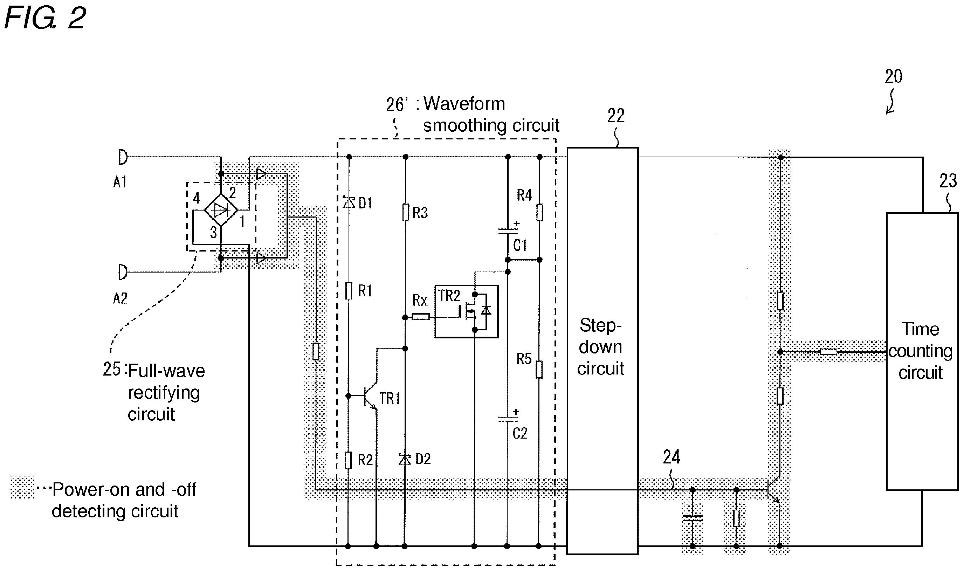

Hereinafter, an embodiment of the present invention will be described in detail with reference to Figs. 1 and 2.

### (Timer apparatus 20)

A configuration of a timer apparatus 20 according to the embodiment will be described with reference to Fig. 1. Fig. 1 is a circuit diagram illustrating a circuit configuration of the timer apparatus 20. The timer apparatus 20 is configured to be able to deal with a wide range (for example, AC/DC = 20.4 to 264 [V]) of electric power supply. As illustrated in Fig. 1, the timer apparatus 20 includes a step-down circuit 22, a time counting circuit 23, a power-on and -off detecting circuit 24 (input voltage detecting circuit), a full-wave rectifying circuit 25, and a waveform smoothing circuit 26 (smoothing circuit).

The timer apparatus 20 is connected to an input device 40 through input terminals A1 and A2. The input device 40 supplies power to the timer apparatus 20. The power supplied from the input device 40 may be an alternating current or a direct current, and a voltage of the power may be within the range that can be dealt with.

The waveform smoothing circuit 26 smoothes the voltage which is full-wave rectified by the full-wave rectifying circuit 25. The voltage smoothed by the waveform smoothing circuit 26 is applied to the step-down circuit 22. A specific configuration of the waveform smoothing circuit 26 will be described later.

The step-down circuit 22 adjusts the voltage input through the waveform smoothing circuit 26. Specifically, the step-down circuit 22 steps down the voltage such that the adjusted voltage falls within a permissible range of the time counting circuit 23. In other words, the step-down circuit 22 serves as a power supply circuit for supplying the power to the time counting circuit 23.

The time counting circuit 23 operates by receiving the electric power supply from the step-down circuit 22, and measures a setting time from an input starting time point of an input signal from the power-on and -off detecting circuit 24. The time counting circuit 23 outputs an output signal after the setting time elapses. The timer apparatus 20 may employ either an analog timer scheme in which the setting time is set using a dial or a digital timer scheme in which the setting time is set using a digital display and various buttons.

As illustrated in Fig. 1, the power-on and -off detecting circuit 24 directly connects the input device 40 and the time counting circuit 23. When the power supply of the input device 40 is changed over, the time counting circuit 23 can immediately detect the switching of a power supply state of the input device 40 based on a change of the signal input from the power-on and -off detecting circuit 24. Thus, the time counting circuit 23 starts the time counting operation without being affected by the waveform smoothing circuit 26 and the step-down circuit 22, so that the delay of starting of the time counting by the time counting circuit 23 can be prevented.

The full-wave rectifying circuit 25 performs the full-wave rectification of the voltage input from the input device 40. Particularly, in the case that the alternating current is input from the input device 40, the full-wave rectifying circuit 25 has a function of simulatively converting the alternating current into a direct current.

As described above, the timer apparatus 20 outputs the output signal after the setting time elapses from the time point of starting of the electric power supply from the input device 40. The timer apparatus 20 can be used in various time difference actuators including a timer function. In the embodiment, by way of example, the time counting is started when the input device 40 starts the electric power supply to the timer apparatus 20. However, the present invention is not limited to the embodiment. The time counting may be started from a time point of ending of the electric power supply from the input device 40 to the timer apparatus 20.

### (Waveform smoothing circuit 26)

As illustrated in Fig. 1, the waveform smoothing circuit 26 includes resistors R1 to R5, a capacitor C1 (second capacitor), diodes D1 and D2, transistors TR1 and TR2 (switching elements), and a capacitor C0 (first capacitor). The resistors R1 to R5, the capacitor C1, the diodes D1 and D2, and the transistors TR1 and TR2 constitute the switching circuit 21.

As described in detail below, the waveform smoothing circuit 26 allows the current to flow through the capacitor C1 when a voltage lower than a threshold is applied from the input device 40, and the waveform smoothing circuit 26 does not allow the current to flow through the capacitor C1 when a voltage higher than the threshold is applied from the input device 40. In Fig. 1, the transistor TR1 is a bipolar transistor, and the transistor TR2 is a normally-on type field effect transistor MOSFET. However, the types of the transistors TR1 and TR2 are not particularly limited. That is, it is only necessary for the waveform smoothing circuit 26 to be able to perform the above operation. Further, the diodes D1 and D2 are Zener diodes, but are not limited to the Zener diodes. Any diode may be used as long as the diode has the similar function.

As illustrated in Fig. 1, in the waveform smoothing circuit 26, the diode D1, the resistor R1, and the resistor R2 are connected in series in this order. The diode D1 is connected to a higher-voltage-side input terminal of the full-wave rectifying circuit 25, and the resistor R2 is connected to a lower-voltage-side input terminal of the full-wave rectifying circuit 25. A base of the transistor TR1 is connected between the resistors R1 and R2.

The resistor R3 and the diode D2 are connected in series to each other, and in parallel to the diode D1 and the resistors R1 and R2. A collector of the transistor TR1 is connected to wiring connecting the resistor R3 and the diode D2, and an emitter of the transistor TR1 is connected to the lower-voltage-side input terminal of the full-wave rectifying circuit 25.

The transistor TR2 and the capacitor C1 are connected in series to each other, and in parallel to the diode D1 and the resistors R1 and R2. The collector of the transistor TR1 is connected to a gate of the transistor TR2 through a resistor Rx.

The resistors R4 and R5 are connected in series to each other, and in parallel to the transistor TR2 and the capacitor C1. The wiring between the capacitor C1 and the transistor TR2 is connected to the wiring between the resistors R4 and R5. The resistors R4 and R5 constitute a voltage dividing circuit of the present invention.

The capacitor C0 is connected to the higher-voltage-side input terminal and the lower-voltage-side input terminal of the full-wave rectifying circuit 25, and connected in parallel to the waveform smoothing circuit 26.

Next, the operation of the circuit illustrated in Fig. 1 will be described below. When the input device 40 does not supply the power to the timer apparatus 20, the current does not flow through the diode D1, the resistor R1, and the resistor R2. The voltage is not applied to the base of the transistor TR1, and the collector and the emitter of the transistor TR1 are not electrically connected together. Accordingly, the current does not flow through the resistor Rx, and the voltage is not applied to the gate of the transistor TR2, so that the transistor TR2 is put into an OFF state. Thus, the current does not flow through the capacitor C1 and the transistor TR2.

When the input device 40 supplies the power to the timer apparatus 20, a divided voltage at the resistor R2 is applied to the base of the transistor TR1.

When a voltage lower than the base voltage is applied to the base of the transistor TR1, the collector and the emitter of the transistor TR1 are not electrically connected together, and the current does not flow through the resistor R3 and the transistor TR1. Therefore, the voltage is applied to the gate of the transistor TR2 through the resistor Rx, so that the transistor TR2 is switched to an ON state. When the transistor TR2 is turned on, the current flows through the capacitor C1 and the transistor TR2. Therefore, the capacitor C1 smoothes the input voltage.

On the other hand, when a voltage higher than or equal to the base voltage is applied to the base of the transistor TR1, the collector and the emitter of the transistor TR1 are electrically connected together, and the current flows through the resistor R3 and the transistor TR1. When the collector and the emitter of the transistor TR1 are not electrically connected together, the transistor TR2 remains in the OFF state because the voltage is not applied to the gate of the transistor TR2. When the transistor TR2 is turned off, the current does not flow through the capacitor C1 and the transistor TR2 because the collector and the emitter of the transistor TR2 are not electrically connected together.

Even if the transistor TR2 is in the OFF state, the current may slightly flow through the capacitor C1 and the transistor TR2. In such a case, an excessive voltage may be applied to the capacitor C1. Thus, as described above, the resistors R4 and R5 are connected in parallel to the capacitor C1 and the transistor TR2. Therefore, not the voltage of the input signal but the divided voltage at the resistor R4 is applied to the capacitor C1. By setting the resistance value of the resistor R5 to be sufficiently large compared to that of the resistor R4, it is possible to prevent the excessive voltage from being applied to the capacitor C1 while reducing the divided voltage at the resistor R4 applied to the capacitor C1. Because there is a current path through the capacitor C1 and the resistor R5, a charge accumulated in the capacitor C1 is discharged from the capacitor C1 through the resistor R5. Therefore, the excessive charge can be prevented from being accumulated in the capacitor C1. When the electric power supply to the waveform smoothing circuit 26 is ended, the output from the waveform smoothing circuit 26 can fall quickly.

As described above, in the configuration of the waveform smoothing circuit 26, the current is passed through the capacitor C1 when the voltage lower than the base voltage is applied to the base of the transistor TR1. Therefore, the capacitor C1 can smooth the input signal. The current does not flow through the capacitor C1 when the voltage higher than or equal to the base voltage is applied to the base of the transistor TR1. Therefore, the breakdown voltage performance of the capacitor C1 can be degraded.

As described above, the capacitor C0 is connected in parallel to the switching circuit 21. When the power is supplied from the input device 40, the input voltage is smoothed with the capacitor C0. When the voltage lower than the base voltage is applied to the base of the transistor TR1, the capacitors C0 and C1 are connected in parallel to each other. Accordingly, the capacitors C0 and C1 smooth the input voltage.

In other words, when the input voltage is low, the power can be stably supplied to the time counting circuit 23 by the smoothing with the capacitors C0 and C1. When the input voltage is high, the electric power supply to the step-down circuit 22 can be reduced by substantially bypassing the capacitor C1. Therefore, the heat generation in the step-down circuit 22 can be reduced. Further, the breakdown voltage performance of the capacitor C1 can be degraded because the high voltage is not applied to the capacitor C1. The size of a capacitor is increased as the breakdown voltage performance is improved, so that the capacitor C1 can be downsized with the above-described configuration. Therefore, the compact, slim timer apparatus 20 can be obtained.

When the input voltage is high, the charge does not need to be supplied to the capacitor C1. Accordingly, the rising delay of the input voltage, which is caused by the capacitor C1, can be prevented in the waveform smoothing circuit 26. This suppresses a time lag between the time point of starting of the electric power supply from the input device 40 to the waveform smoothing circuit 26 and the time point of starting of the electric power supply to the time counting circuit 23. Further, when the input voltage is high, the charge is not accumulated in the capacitor C1. Accordingly, the fall of the input voltage from the waveform smoothing circuit 26 to the time counting circuit 23 becomes faster during the electric interruption.

This can solve such problems that starting of the time counting performed by the time counting circuit 23 is delayed and that the time counting operation cannot be started from the starting time point of the electric power supply from the input device 40 to the waveform smoothing circuit 26.

### (Modification of waveform smoothing circuit 26)

A modification of the waveform smoothing circuit 26 illustrated in Fig. 1 will be described below with reference to Fig. 2. Fig. 2 is a circuit diagram of the timer apparatus 20 including a waveform smoothing circuit 26' according to the modification, instead of the waveform smoothing circuit 26.

As illustrated in Fig. 2, the waveform smoothing circuit 26' includes a capacitor C2 (fourth capacitor), and does not include the capacitor C0 in the waveform smoothing circuit 26 of Fig. 1. The capacitor C2 is connected between the capacitor C1 (third capacitor) and the lower-voltage-side input terminal of the timer apparatus 20. That is, the capacitor C2 is connected in parallel to the resistor R5 and the transistor TR2.

With this structure, the divided voltage at the resistor R4 is applied to the capacitor C1 while the divided voltage at the resistor R5 is applied to the capacitor C2. Accordingly, it is not necessary for the capacitors C1 and C2 to have the breakdown voltage performance enough to withstand the maximum voltage (264 V) input from the input device 40.

When the voltage lower than the base voltage is applied to the base of the transistor TR1, the transistor TR2 is put into the OFF state. Accordingly, the capacitor C2 is not used, and the charge is accumulated only by the capacitor C1 to smooth the voltage.

On the other hand, when the voltage higher than or equal to the base voltage is applied to the base of the transistor TR1, the transistor TR2 is put into the ON state. Accordingly, the capacitors C1 and C2 are connected in series to each other. In this case, the electric power supply to the step-down circuit 22 can be reduced compared with the case that only the capacitor C1 is used. Therefore, the heat generation in the step-down circuit 22 can be reduced.

The capacity of the series circuit of the capacitors C1 and C2 is smaller than the capacity of the single capacitor C1. Therefore, the rising delay of the voltage can be prevented in the waveform smoothing circuit 26'. This enables the suppression of the time lag between the starting time point of the electric power supply from the input device 40 to the waveform smoothing circuit 26' and the starting time point of the electric power supply to the time counting circuit 23. This can solve such problems that starting of the time counting performed by the time counting circuit 23 is delayed and that the time counting operation cannot be started from the starting time point of the electric power supply from the input device 40 to the waveform smoothing circuit 26'. In addition, when the input voltage is high, the capacity of the waveform smoothing circuit 26' is smaller than the capacity of the capacitor C1, the fall of the input voltage from the waveform smoothing circuit 26' to the time counting circuit 23 becomes faster during the electric interruption.

In the embodiment, one threshold is set for the input voltage, and the capacitor to be used is switched based on whether the input voltage is higher or lower than the threshold. However, the present invention is not limited to the embodiment. For example, a plurality of thresholds is provided, and the capacitor may be switched according to three stages or more.

### (Another application example of power supply circuit)

In the embodiment described above, the timer apparatus 20 includes the step-down circuit 22 as the power supply circuit according to the present invention and the time counting circuit 23. However, the present invention is not limited to the embodiment. For example, instead of the time counting circuit 23, various electric apparatuses (such as a thermoregulator) may be connected to the power supply circuit of the present invention. In such a case, the power supply circuit can suppress the heat generation in the power supply circuit and prevent the delay between the application starting of the input voltage and the starting of the electric power supply to the electric apparatus even if the permissible range of the input voltage from the input device 40 is expanded.

The present invention is not limited to the above embodiment, but various changes can be made without departing from the scope of the claims.

## Claims

1. A timer apparatus (20) comprising:
a smoothing circuit (26) comprising a first capacitors (C0) and a second capacitor (C1) that are connected in parallel, and configured to smooth an input voltage from an outside;
a step-down circuit (22) configured to adjust a voltage supplied from the smoothing circuit (26); and
a time counting circuit (23) to which power is supplied from the step-down circuit (22), wherein
the smoothing circuit (26) further comprises a switching circuit (21) configured to switch the first and second capacitors (C0, C1) such that both the first and second capacitors (C0, C1) having a first capacity smooth the input voltage when the input voltage is less than a predetermined value, and only the first capacitor (C0) having a second capacity being decreased with respect to the first capacity smooths the input voltage when the input voltage is greater than or equal to the predetermined value.

2. A timer apparatus (20) comprising:
a smoothing circuit (26) comprising two capacitors (C1, C2) that are connected in series, and configured to smooth an input voltage from an outside;
a step-down circuit (22) configured to adjust a voltage supplied from the smoothing circuit (26); and
a time counting circuit (23) to which power is supplied from the step-down circuit (22), wherein
the smoothing circuit (26) comprises a switching circuit (21) configured to switch the third and fourth capacitors (C1, C2) such that only the third capacitor (C1) having a first capacity smooths the input voltage when the input voltage is less than a predetermined value, and both the third and fourth capacitors (C1, C2) having a second capacity being decreased with respect to the first capacity smooth the input voltage when the input voltage is greater than or equal to the predetermined value.

3. The timer apparatus (20) according to claim 1 or 2, wherein
the switching circuit (21) comprises a switching element (TR1,TR2) and
the switching element (TR1,TR2) performs switching operation according to the input voltage to switch the capacitors.

4. The timer apparatus (20) according to claim 1, further comprising
a voltage dividing circuit (R4,R5) configured to set a voltage applied to the second capacitor (C1) to a divided voltage lower than the input voltage when the input voltage is greater than or equal to the predetermined value.

5. The timer apparatus (20) according to claim 2, further comprising
a voltage dividing circuit (R4,R5) configured to set a voltage applied to each of the capacitors (C1, C2) to a divided voltage lower than the input voltage when the input voltage is greater than or equal to the predetermined value.

6. The timer apparatus (20) according to any one of claims 1 to 5, further comprising an input voltage detecting circuit (24) configured to input a signal, which indicates whether the input voltage is applied, to the time counting circuit (23), wherein
the input voltage detecting circuit (24) is configured to detect the input voltage from the outside with no use of the smoothing circuit (26) and the step-down circuit (22).

## Patentansprüche

1. Timervorrichtung (20), umfassend:
eine Glättungsschaltung (26), die einen ersten Kondensator (C0) und einen zweiten Kondensator (C1) umfasst, die parallelgeschaltet sind, und eingerichtet ist, eine von außen angelegte Eingangsspannung zu glätten;
eine Abwärtsschaltung (22), welche eingerichtet ist, eine Spannung einzustellen, die von der Glättungsschaltung (26) geliefert wird; und
eine Zeitzählungsschaltung (23), der von der Abwärtsschaltung (22) Energie geliefert wird, wobei
die Glättungsschaltung (26) weiterhin eine Umschaltsschaltung (21) umfasst, welche eingerichtet ist, den ersten und zweiten Kondensator (C0, C1) derart zu schalten, dass sowohl der erste als auch der zweite Kondensator (C0, C1), die eine erste Kapazität aufweisen, die Eingangsspannung glätten, wenn die Eingangsspannung niedriger als ein vorbestimmter Wert ist,
wobei nur der erste Kondensator (C0) mit einer zweiten Kapazität, die in Bezug auf die erste Kapazität verringert ist, die Eingangsspannung glättet, wenn die Eingangsspannung größer oder gleich dem vorbestimmten Wert ist.

2. Timervorrichtung (20), umfassend:
eine Glättungsschaltung (26), welche zwei in Serie geschaltete Kondensatoren (C1, C2) umfasst und eingerichtet ist, eine von außen angelegte Eingangsspannung zu glätten;
eine Abwärtsschaltung (22), welche eingerichtet ist, eine Spannung einzustellen, welche von der Glättungsschaltung (26) geliefert wird; und
eine Zeitzählungsschaltung (23), der von der Abwärtsschaltung (22) Energie geliefert wird, wobei
die Glättungsschaltung (26) eine Umschaltsschaltung (21) umfasst, welche eingerichtet ist, den dritten und vierten Kondensator (C1, C2) derart zu schalten, dass nur der dritte Kondensator (C1) mit einer ersten Kapazität die Eingangsspannung glättet, wenn die Eingangsspannung niedriger als ein vorbestimmter Wert ist,
wobei sowohl der dritte als auch der vierte Kondensator (C1, C2), welche eine zweite Kapazität aufweisen, die in Bezug auf die erste Kapazität verringert ist, die Eingangsspannung glätten, wenn die Eingangsspannung größer oder gleich dem vorbestimmten Wert ist.

3. Timervorrichtung (20) gemäß Anspruch 1 oder 2,
wobei die Umschaltsschaltung (21) ein Schaltelement (TR1, TR2) umfasst und das Schaltelement (TR1, TR2) einen Schaltvorgang gemäß der Eingangsspannung zum Schalten der Kondensatoren durchführt.

4. Timervorrichtung (20) gemäß Anspruch 1, weiterhin umfassend
eine Spannungsteilerschaltung (R4, R5), welche eingerichtet ist, eine an den zweiten Kondensator (C1) angelegte Spannung auf eine geteilte Spannung festzusetzen, die niedriger als die Eingangsspannung ist, wenn die Eingangsspannung größer oder gleich dem vorbestimmten Wert ist.

5. Timervorrichtung (20) gemäß Anspruch 2, weiterhin umfassend
eine Spannungsteilerschaltung (R4, R5), welche eingerichtet ist, eine an jeden der Kondensatoren (C1, C2) angelegte Spannung auf eine geteilte Spannung festzusetzen, die niedriger als die Eingangsspannung ist, wenn die Eingangsspannung größer oder gleich dem vorbestimmten Wert ist.

6. Timervorrichtung (20) gemäß einem der Ansprüche 1 bis 5,
weiterhin umfassend eine Eingangsspannungserfassungsschaltung (24), welche eingerichtet ist, ein Signal an die Zeitzählungsschaltung (23) einzugeben, welches angibt, ob die Eingangsspannung angelegt ist,
wobei die Eingangsspannungserfassungsschaltung (24) eingerichtet ist, ohne Verwendung der Glättungsschaltung (26) und der Abwärtsschaltung (22) die von außen angelegte Eingangsspannung zu erfassen.

## Revendications

1. Appareil chronométreur (20) comprenant :
un circuit de lissage (26) comprenant un premier condensateurs (C0) et un second condensateur (C1) qui sont connectés en parallèle, et configurés pour lisser une tension d'entrée qui provient de l'extérieur ;
un circuit abaisseur (22) configuré pour ajuster une tension fournie par le circuit de lissage (26) ; et
un circuit de décompte du temps (23) auquel de la puissance est fournie par le circuit abaisseur (22), dans lequel
le circuit de lissage (26) comprend en outre un circuit de commutation (21) configuré pour commuter le premier et le second condensateurs (C0, C1) de sorte que le premier et le second condensateurs (C0, C1) ayant une première capacité lissent la tension d'entrée lorsque la tension d'entrée est inférieure à une valeur prédéterminée, et que seul le premier condensateur (C0) ayant une seconde capacité réduite par rapport à la première capacité lisse la tension d'entrée lorsque la tension d'entrée est supérieure ou égale à la valeur prédéterminée.

2. Appareil chronométreur (20) comprenant :
un circuit de lissage (26) comprenant deux condensateurs (C1, C2) qui sont connectés en série, et configurés pour lisser une tension d'entrée qui provient de l'extérieur ;
un circuit abaisseur (22) configuré pour ajuster une tension fournie par le circuit de lissage (26) ; et
un circuit de décompte du temps (23) auquel de la puissance est fournie par le circuit abaisseur (22), dans lequel
le circuit de lissage (26) comprend un circuit de commutation (21) configuré pour commuter le troisième et le quatrième condensateurs (C1, C2) de sorte que seul le troisième condensateur (C1) ayant une première capacité lisse la tension d'entrée lorsque la tension d'entrée est inférieure à une valeur prédéterminée, et que le troisième et le quatrième condensateurs (C1, C2) ayant une seconde capacité réduite par rapport à la première capacité lissent la tension d'entrée lorsque la tension d'entrée est supérieure ou égale à la valeur prédéterminée.

3. Appareil chronométreur (20) selon la revendication 1 ou 2, dans lequel
le circuit de commutation (21) comprend un élément de commutation (TR1, TR2) et
l'élément de commutation (TR1, TR2) effectue une opération de commutation selon la tension d'entrée afin de déclencher les condensateurs.

4. Appareil chronométreur (20) selon la revendication 1, comprenant en outre
un circuit de séparation de tension (R4, R5) configuré pour régler une tension appliquée au second condensateur (C1) sur une tension divisée inférieure à la tension d'entrée lorsque la tension d'entrée est supérieure ou égale à la valeur prédéterminée.

5. Appareil chronométreur (20) selon la revendication 2, comprenant en outre
un circuit de séparation de tension (R4, R5) configuré pour régler une tension appliquée à chacun des condensateurs (C1, C2) sur une tension divisée inférieure à la tension d'entrée lorsque la tension d'entrée est supérieure ou égale à la valeur prédéterminée.

6. Appareil chronométreur (20) selon l'une quelconque des revendications 1 à 5, comprenant en outre un circuit de détection de tension d'entrée (24) configuré pour fournir un signal, qui indique si la tension d'entrée est appliquée, au circuit de décompte du temps (23), dans lequel
le circuit de détection de tension d'entrée (24) est configuré pour détecter la tension d'entrée qui provient de l'extérieur sans utiliser le circuit de lissage (26) et le circuit abaisseur (22).
